# DEMANDE DE BREVET EUROPEEN

(11) **EP 2 887 125 A1**
(43) Date de publication de la demande: **24.06.2015**
(21) Numéro de dépôt: 14195257.2
(22) Date de dépôt: 27.11.2014
(51) Int. Cl.: G02B 27/01, G02B 5/10, G03B 21/60

(54) **Système de visualisation comprenant un écran comportant un réseau de microstructures tridimensionnelles réfléchissantes**

(30) Priorité: 11.12.2013 FR 1302897
(71) Demandeur: Thales, 92200 Neuilly Sur Seine (FR)
(72) Inventeur: Pelletier, Sébastien, 33187 LE HAILLAN Cedex (FR); Gueguen, Aude, 33187 LE HAILLAN Cedex (FR); Grossetete, Matthieu, 33187 LE HAILLAN Cedex (FR); Bardon, Jean-Luc, 33187 LE HAILLAN Cedex (FR); Laluque, Laurent, 33187 LE HAILLAN Cedex (FR)
(74) Mandataire: Bréda, Jean-Marc

(57) **Abrégé**

Le domaine général de l'invention est celui des systèmes de visualisation comportant un projecteur d'images et un écran de visualisation associé, ledit système de visualisation destiné à être utilisé par un observateur situé à un emplacement déterminé, ledit écran de visualisation comportant deux faces transparentes et sensiblement parallèles, ledit écran de visualisation comportant sur au moins une de ses faces transparentes une pluralité de motifs optiques (10) régulièrement répartis. Le projecteur d'images selon l'invention éclairant l'écran sous une pluralité d'incidences déterminées par la position et la taille de l'écran de visualisation, lesdites incidences centrées sur une incidence moyenne, les motifs optiques comportent au moins une surface réfléchissante (11) courbe orientée de façon à réfléchir les rayons lumineux ayant au moins l'incidence moyenne dans une ou des directions correspondant audit emplacement déterminé de l'observateur. Plusieurs modes de réalisation sont décrits.

## Description

Le domaine de l'invention est celui des dispositifs de visualisation projetant une image sur un écran semi-transparent. Ces dispositifs permettent d'afficher une image face à l'utilisateur en superposition sur le paysage extérieur. Un des domaines d'utilisation possible est la présentation d'informations dans les véhicules, plus précisément dans les cockpits d'aéronef et en particulier dans ceux qui disposent de surfaces vitrées importantes.

Ces systèmes de visualisation permettent de conserver l'attention de l'utilisateur sur l'environnement qui l'entoure, tout en lui donnant accès instantanément à des informations additionnelles. Dans le cas de la conduite d'un véhicule, avoir des informations affichées dans le champ visuel de l'environnement extérieur évite à l'utilisateur d'avoir à chercher ces informations sur des écrans situés classiquement sur sa planche de bord ou son tableau de bord.

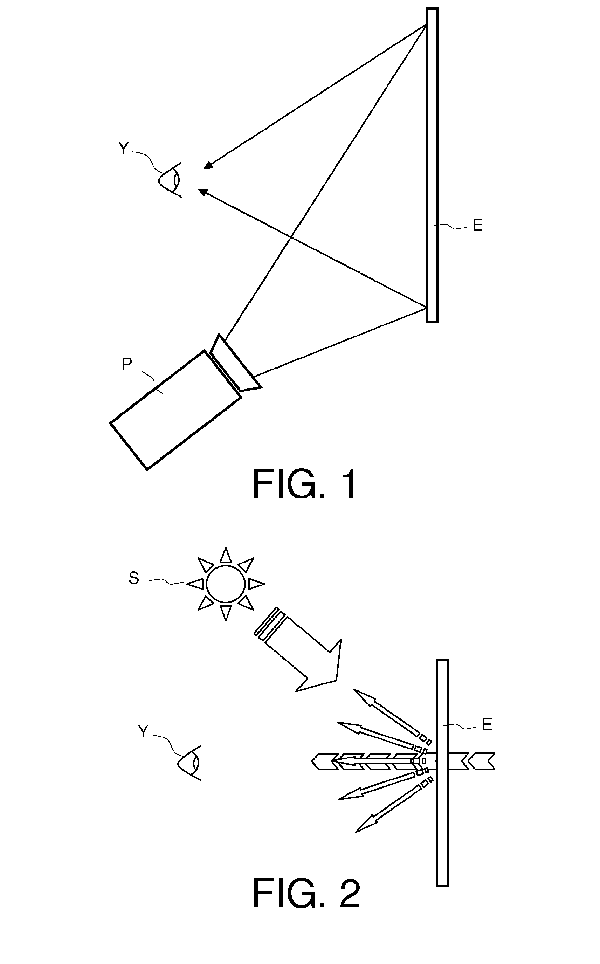

Il existe différentes solutions techniques permettant de projeter une image sur un écran semi-transparent. La plus courante est illustrée en figure 1. Elle consiste à projeter l'image issue d'un projecteur P émettant dans le visible sur la surface d'un film diffusant transparent E. Le diffuseur diffuse l'image projetée vers l'oeil Y de l'observateur, tout en restant relativement transparent et permettant ainsi la vision de l'extérieur. Le compromis entre transmission et diffusion n'est pas simple à trouver. Des films diffusants sont dédiés à la projection publicitaire sur les parois vitrées des magasins. Cependant, la technique est surtout utilisée de nuit, c'est-à-dire sous faible luminosité ambiante. De jour, cette technique donne des résultats médiocres. En effet, comme on le voit en figure 2, le film E diffuse la lumière solaire S dans toutes les directions (flèches droites rayées de la figure 2). La transmission de la lumière extérieure est représentée par une succession de chevrons sur cette figure. Le film apparaît alors laiteux, la transparence est limitée, le rendement en réflexion et la luminosité de l'image projetée restent faibles et peu satisfaisants.

Aussi, la demanderesse a proposé dans la demande FR 2 986 624 intitulée « Projecteur optique à écran de projection semi-transparent » un écran de visualisation comportant une pluralité de motifs diffusants la lumière régulièrement répartis sur une surface transparente, ces motifs pouvant comporter un traitement réfléchissant. Par rapport aux systèmes précédents, l'écran semi-transparent de ce projecteur possède à la fois une grande transparence et donne une bonne luminosité de l'image projetée, tout en ayant une diffraction limitée.

Cependant, les rayons lumineux issus du projecteur et diffusés par l'écran ont tous une incidence connue. De la même façon, l'éclairement solaire ne peut venir que de certaines directions, certaines parties du cockpit constituant un masque naturel. Or, l'écran précédent est isotrope. Il ne prend pas en compte de façon fine les variations d'incidence des rayons lumineux issus du projecteur de façon à optimiser les rendements de diffusion vers l'oeil de l'observateur.

L'écran selon l'invention ne présente pas ces inconvénients. Il comporte des motifs orientés de façon à prendre en compte les positions du projecteur d'images et de l'utilisateur de façon à assurer une répartition optimale de la lumière. De plus, la diffusion par l'éclairement solaire est minimisée. Plus précisément, l'invention a pour objet un système de visualisation comportant un projecteur d'images et un écran de visualisation associé, ledit système de visualisation destiné à être utilisé par un observateur situé à un emplacement déterminé, ledit écran de visualisation comportant deux faces transparentes et sensiblement parallèles, ledit écran de visualisation comportant sur au moins une de ses faces transparentes une pluralité de motifs optiques régulièrement répartis, caractérisé en ce que, le projecteur d'images éclairant l'écran sous une pluralité d'incidences déterminées par la position et la taille de l'écran de visualisation, lesdites incidences centrées sur une incidence moyenne, les motifs optiques comportent au moins une surface réfléchissante courbe orientée de façon à réfléchir les rayons lumineux ayant au moins l'incidence moyenne dans une ou des directions correspondant audit emplacement déterminé de l'observateur.

Avantageusement, l'orientation de chaque motif est adaptée à l'incidence de la lumière issue du projecteur d'image et qui éclaire ledit motif.

Avantageusement, chaque motif comporte une et une seule surface réfléchissante convexe.

Avantageusement, chaque motif comporte uniquement une et une seule surface réfléchissante concave.

Avantageusement, chaque motif comporte uniquement deux surfaces réfléchissantes concaves.

Avantageusement, les deux surfaces réfléchissantes concaves sont cylindriques inclinées par rapport au plan des faces transparentes, les deux surfaces formant sensiblement un dièdre, l'axe de la première surface cylindrique étant parallèle au plan des faces transparentes, l'axe de la seconde surface cylindrique étant dans un plan perpendiculaire audit plan des faces transparentes.

Avantageusement, les motifs sont des pentaprismes rapportés sur une des faces transparentes, chaque pentaprisme comportant une face d'entrée plane dirigée vers le projecteur d'images, une face de sortie comportant une partie courbe dirigée vers l'utilisateur, deux faces planes réfléchissantes et une face courbe réfléchissante.

Avantageusement, chaque motif comporte une microlentille disposée sur une première face transparente et un micromiroir disposé sur la seconde face transparente, la focale de la microlentille étant sensiblement égale à l'épaisseur optique de l'écran, le micromiroir étant disposé dans la zone de focalisation de la microlentille.

L'invention sera mieux comprise et d'autres avantages apparaîtront à la lecture de la description qui va suivre donnée à titre non limitatif et grâce aux figures annexées parmi lesquelles :
La figure 1 déjà commentée représente le synoptique d'un système de visualisation à projecteur d'images selon l'art antérieur ;
La figure 2 déjà commentée représente la diffusion solaire sur un écran de visualisation selon l'art antérieur ;
La figure 3 représente un système de visualisation comportant un écran de visualisation selon l'invention ;
La figure 4 représente une vue en coupe d'un premier mode de réalisation d'un écran de visualisation selon l'invention ;
La figure 5 représente une vue en coupe et une vue de dessus d'un second mode de réalisation d'un écran de visualisation selon l'invention ;
La figure 6 représente une vue de dessus d'un troisième mode de réalisation d'un écran de visualisation selon l'invention ;
La figure 7 représente une vue en coupe d'un quatrième mode de réalisation d'un écran de visualisation selon l'invention.

Le système de visualisation selon l'invention comporte un projecteur d'images et un écran de visualisation associé spécifique. L'image émise par le projecteur d'images se forme sur ou au voisinage immédiat de la surface de l'écran de visualisation. Cet écran de visualisation comporte deux faces transparentes et sensiblement parallèles. Ces faces ne sont pas nécessairement planes et l'écran selon l'invention peut parfaitement s'intégrer à un pare-brise courbe, par exemple.

Dans un grand nombre d'applications et en particulier, lorsque le système de visualisation est intégré dans un cockpit ou dans une cabine de pilotage, la position du projecteur par rapport à l'écran est parfaitement déterminée et les yeux de l'utilisateur occupent un emplacement déterminé que l'on appelle dans certaines applications « boîte à oeil ». De la même façon, la lumière solaire ne peut venir que de certaines directions, le cockpit introduisant des masques naturels.

L'écran selon l'invention exploite cette propriété. En disposant une pluralité de motifs réfléchissants la lumière régulièrement répartis sur une de ses faces transparentes, on peut les agencer de façon que, le projecteur d'images éclairant l'écran sous une pluralité d'incidences déterminées par la position et la taille de l'écran de visualisation, lesdites incidences centrées sur une incidence moyenne, les motifs optiques comportent au moins une surface réfléchissante courbe orientée de façon à réfléchir les rayons lumineux ayant au moins l'incidence moyenne dans une ou des directions correspondant audit emplacement déterminé de l'observateur. Les rayons de courbure des motifs sont faibles, de l'ordre de quelques centaines de microns. On comprend alors que tout changement d'incidence provoque un changement très important dans la direction du rayon réfléchi, éliminant tout rayon lumineux qui n'est pas issu du projecteur.

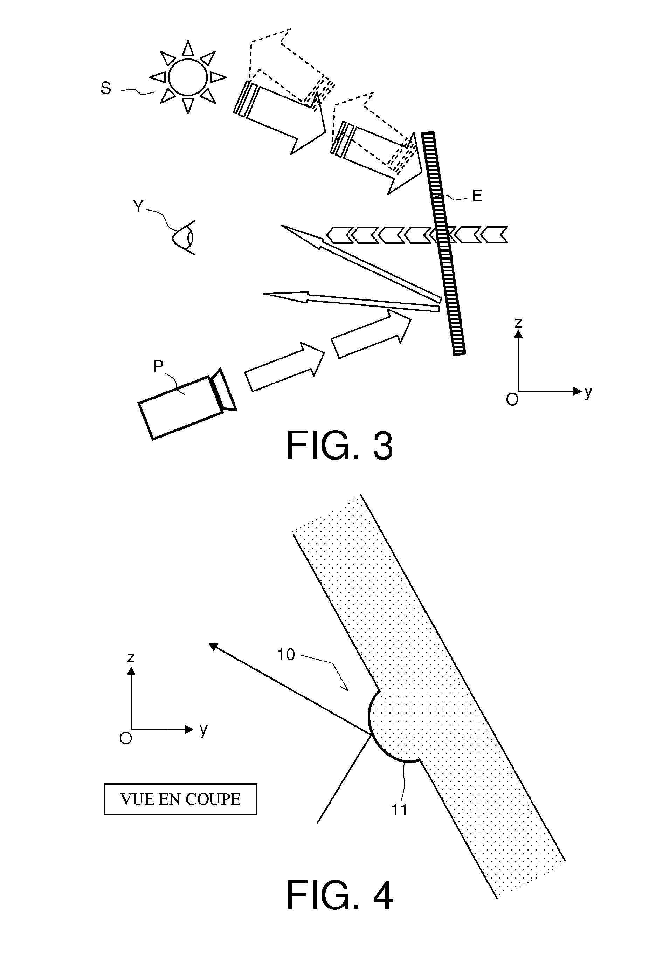

Cette propriété est illustrée sur la figure 3. Les rayons solaires S ne sont pas diffusés vers l'oeil de l'observateur Y alors que ceux issus du projecteur P le sont par l'écran E.

On peut différentier les écrans de visualisation comportant les motifs selon l'invention en deux grands types. Dans le premier type, tous les motifs de l'écran sont strictement identiques. Dans le second type, chaque motif est défini en fonction de l'incidence moyenne sur le motif des rayons lumineux issus du projecteur. On peut ainsi faire varier les rayons de courbure ou les inclinaisons des surfaces réflectives.

Généralement, les dimensions des motifs sont de l'ordre de quelques dizaines de microns à quelques centaines de microns. Le pourcentage de surface de l'écran occupée par les motifs détermine le taux de transmission de l'écran de visualisation. Ainsi, si les motifs occupent 20% de la surface de l'écran, le taux de transmission hors pertes par réflexions vitreuses ne peut dépasser 80%. La réalisation de tels motifs ne pose pas de problèmes de réalisation particuliers.

A titres d'exemples non limitatifs, les figures 4 à 7 représentent différents modes de réalisation d'un écran de visualisation selon l'invention. Ces figures sont toutes référencées dans le même repère (O, x, y, z) qui est aussi celui de la figure 3 et représentent toutes soit des vues en coupe, soit des vues de dessus d'une partie d'écran comportant un motif. Les vues sont indiquées sur les figures. Les flèches brisées sur les vues en coupe indiquent la réflexion d'un rayon lumineux issu du projecteur sur le motif, la pointe de la flèche est dirigée vers l'observateur.

La figure 4 représente, en vue en coupe, un premier mode de réalisation des motifs selon l'invention. Chaque motif 10 est une portion de micromiroir courbe convexe 11 de faible rayon de courbure. Cette portion courbe est située sur une première face transparente dirigée vers l'observateur. Elle est représentée en gras sur la figure 4. Chaque micromiroir réfléchit vers la boîte à oeil, de manière spéculaire, la lumière incidente en provenance du projecteur. La focale équivalente du micromiroir est ajustée de manière à engendrer dans le plan de la boîte à oeil une défocalisation couvrant les dimensions transversales de la boîte à oeil. Ainsi, l'extension de la tache de défocalisation est directement liée à la zone utile du micromiroir. Les éventuelles parties inutilisées du motif et les surfaces de raccord à la surface de l'écran qui n'ont pas de rôle optique peuvent être recouvertes d'un traitement absorbant de façon à supprimer toute diffusion de la lumière. La forme de la portion de surface réfléchissante peut être ajustée de manière à avoir une répartition uniforme de l'éclairement dans la boîte à oeil. A titre de variante, il est possible d'utiliser un miroir concave à la place du miroir convexe.

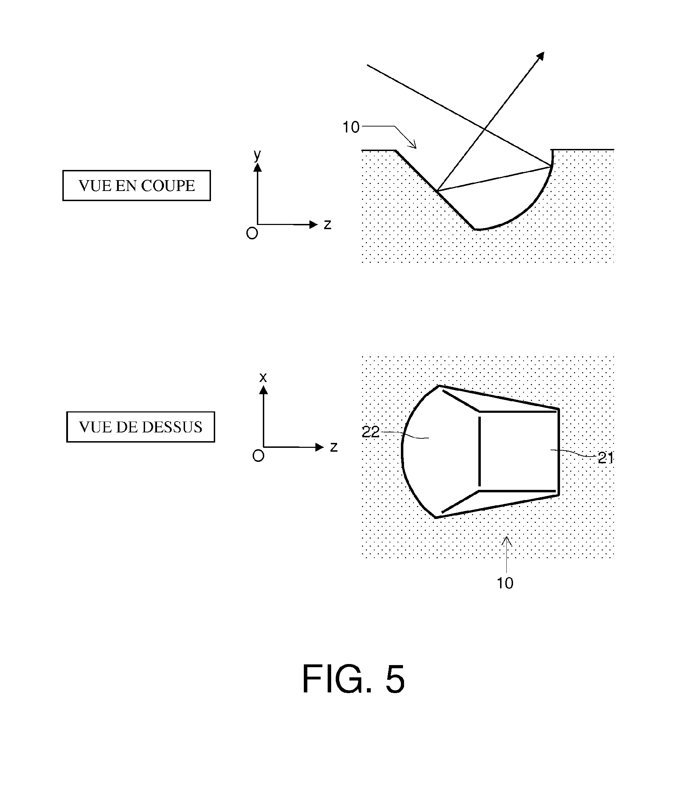

La figure 5 représente un second mode de réalisation des motifs. Dans cette configuration, chaque motif 10 est creusé dans une face transparente et comporte deux surfaces réfléchissantes 21 et 22 cylindriques inclinées par rapport au plan des faces transparentes, les deux surfaces formant sensiblement un dièdre, l'axe de la première surface cylindrique étant parallèle au plan des faces transparentes, l'axe de la seconde surface cylindrique étant dans un plan perpendiculaire audit plan des faces transparentes. Les deux surfaces cylindriques sont limitées par deux pans coupés plans. Les rayons des deux surfaces cylindriques peuvent être voisins, de l'ordre de quelques centaines de microns. Les rayons lumineux issus du projecteur sont réfléchis par la première surface cylindrique, puis par la seconde surface cylindrique. Cette configuration permet d'étaler les faisceaux réfléchis dans une ouverture différente selon l'axe.

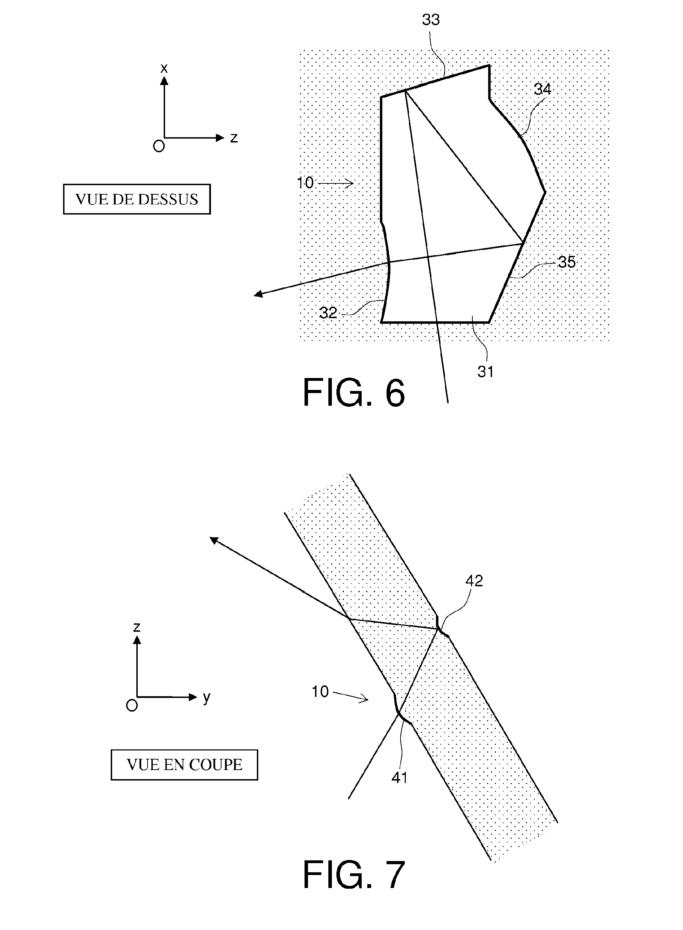

La figure 6 représente un troisième mode de réalisation des motifs. Les motifs 10 sont des pentaprismes rapportés sur une des faces transparentes. Classiquement, un pentaprisme est un prisme optique comportant cinq faces planes qui sont respectivement une face d'entrée, une première face réfléchissante, une seconde face réfléchissante et une face de sortie. La cinquième face n'a pas de rôle optique. Un rayon lumineux entrant par la première face ressort perpendiculairement à lui-même par la face de sortie après deux réflexions successives sur les faces réfléchissantes. Le pentaprisme selon l'invention assure globalement la même fonction qu'un pentaprisme classique et comporte également une face d'entrée 31 et une face de sortie 32 sensiblement perpendiculaires. Mais certaines faces sont courbes de façon à donner au pentaprisme une puissance optique importante. Ainsi, à titre d'exemple, chaque pentaprisme selon l'invention comporte une face d'entrée plane 31 dirigée vers le projecteur d'images, une face de sortie 32 comportant une partie courbe dirigée vers l'utilisateur, deux faces planes réfléchissantes 33 et 35 et une cinquième face 34 courbe réfléchissante. Les rayons des faces courbes sont de l'ordre de quelques centaines de microns.

La figure 7 représente un sixième mode de réalisation des motifs selon l'invention. Chaque motif 10 comporte une microlentille 41 disposée sur une première face transparente de l'écran de visualisation et un micromiroir 42 convexe disposé sur la seconde face transparente, la focale de la microlentille étant sensiblement égale à l'épaisseur optique de l'écran, le micromiroir étant disposé dans la zone de focalisation de la microlentille. Ainsi, il est possible en ajustant le rayon du miroir convexe de sélectionner l'angle de diffusion vers l'observateur.

## Revendications

1. Système de visualisation comportant un projecteur d'images (P) et un écran de visualisation (E) associé, ledit système de visualisation destiné à être utilisé par un observateur situé à un emplacement déterminé, ledit écran de visualisation comportant deux faces transparentes et sensiblement parallèles, ledit écran de visualisation comportant sur au moins une de ses faces transparentes une pluralité de motifs optiques (10) régulièrement répartis, **caractérisé en ce que**, le projecteur d'images éclairant l'écran sous une pluralité d'incidences déterminées par la position et la taille de l'écran de visualisation, lesdites incidences centrées sur une incidence moyenne, les motifs optiques comportent au moins une surface réfléchissante courbe (11, 21, 22, 34, 42) orientée de façon à réfléchir les rayons lumineux ayant au moins l'incidence moyenne dans une ou des directions correspondant audit emplacement déterminé de l'observateur.

2. Système de visualisation selon la revendication 1, **caractérisé en ce que** l'orientation de chaque motif (10) est adapté à l'incidence de la lumière issue du projecteur d'image et qui éclaire ledit motif.

3. Système de visualisation selon la revendication 1, **caractérisé en ce que** chaque motif (10) comporte une et une seule surface réfléchissante convexe (11).

4. Système de visualisation selon la revendication 1, **caractérisé en ce que** chaque motif (10) comporte uniquement une et une seule surface réfléchissante concave.

5. Système de visualisation selon la revendication 1, **caractérisé en ce que** chaque motif (10) comporte uniquement deux surfaces réfléchissantes concaves (21, 22).

6. Système de visualisation selon la revendication 5, **caractérisé en ce que** les deux surfaces réfléchissantes concaves (21, 22) sont cylindriques inclinées par rapport au plan des faces transparentes, les deux surfaces formant sensiblement un dièdre, l'axe de la première surface cylindrique étant parallèle au plan des faces transparentes, l'axe de la seconde surface cylindrique étant dans un plan perpendiculaire audit plan des faces transparentes.

7. Système de visualisation selon la revendication 1, **caractérisé en ce que** les motifs (10) sont des pentaprismes rapportés sur une des faces transparentes, chaque pentaprisme comportant une face d'entrée plane (31) dirigée vers le projecteur d'images, une face de sortie (32) comportant une partie courbe dirigée vers l'utilisateur, deux faces planes réfléchissantes (33, 35) et une face courbe réfléchissante (34).

8. Système de visualisation selon la revendication 1, **caractérisé en ce que** chaque motif (10) comporte une microlentille (41) disposée sur une première face transparente et un micromiroir (42) disposé sur la seconde face transparente, la focale de la microlentille étant sensiblement égale à l'épaisseur optique de l'écran, le micromiroir étant disposé dans la zone de focalisation de la microlentille.
